# EUROPEAN PATENT SPECIFICATION

(11) **EP 1 773 009 B1**
(45) Date of publication and mention of the grant of the patent: **11.01.2012**
(21) Application number: 06121801.2
(22) Date of filing: 05.10.2006
(51) Int. Cl.: H04W 36/30

(54) **Mobile communications cell changing procedure**
Verfahren zum Wechseln einer Zelle für Mobilkommunikation
Procédé de changement de cellule pour des communications mobiles

(30) Priority: 06.10.2005 GB 0520341
(43) Date of publication of application: 11.04.2007
(60) Divisional application: 10012921.2
(73) Proprietor: Samsung Electronics Co., Ltd., Suwon-si, Gyeonggi-do (KR)
(72) Inventor: Van der Velde, Himke, Staines, Middlesex TW18 4QE (GB); Van Lieshout, Gert Jan, Staines, Middlesex TW18 4QE (GB); Jeong, Kyeong-In, Yeongtong-gu Suwon-si Gyeonggi-do (KR)
(74) Representative: Grünecker, Kinkeldey, Stockmair & Schwanhäusser

(56) References cited:
- US-A1- 2003 108 027
- US-A1- 2003 147 370
- QUALCOMM: "Enhanced HSDPA Re-pointing Scheme" 3GPP TSG-RAN WG2 #48, R2-051969, [Online] 29 August 2005 (2005-08-29), pages 1-8, XP002416750 Retrieved from the Internet: URL:http://www.3gpp.org/ftp/tsg_ran/WG2_RL 2/TSGR2_48/Documents/> [retrieved on 2007-01-25]
- SIEMENS: "Fast Cell switching for HSDPA" 3GPP TSG-RAN2 #46BIS, XX, XX, 14 April 2005 (2005-04-14), page complete, XP002336228
- QUALCOMM: "L2 based serving cell selection for HSDPA" 3GPP TSG-RAN WG2 #46, R2-050548, [Online] 14 February 2005 (2005-02-14), pages 1-4, XP002416751 Retrieved from the Internet: URL:http://www.3gpp.org/ftp/tsg_ran/WG2_RL 2/TSGR2_46/Documents/> [retrieved on 2007-01-25]
- SAMSUNG: "HSDPA re-pointing" 3GPP TSG-RAN WG2 #48BIS, R2-052528, [Online] 10 October 2005 (2005-10-10), pages 1-6, XP002416752 Retrieved from the Internet: URL:http://www.3gpp.org/ftp/tsg_ran/WG2_RL 2/TSGR2_48bis/Documents/> [retrieved on 2007-01-25]
- "Proposal for supporting Real Time services over HSDPA" 3GPP TSG-RAN2 #46BIS, XX, XX, 4 April 2005 (2005-04-04), pages 1-6, XP002368691

## Description

The present invention relates to a cell changing procedure in the field of mobile telecommunications. More particularly, the present invention relates to a method and apparatus involving high speed downlink shared channel cell changing procedures.

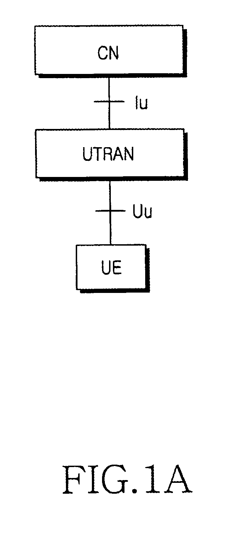

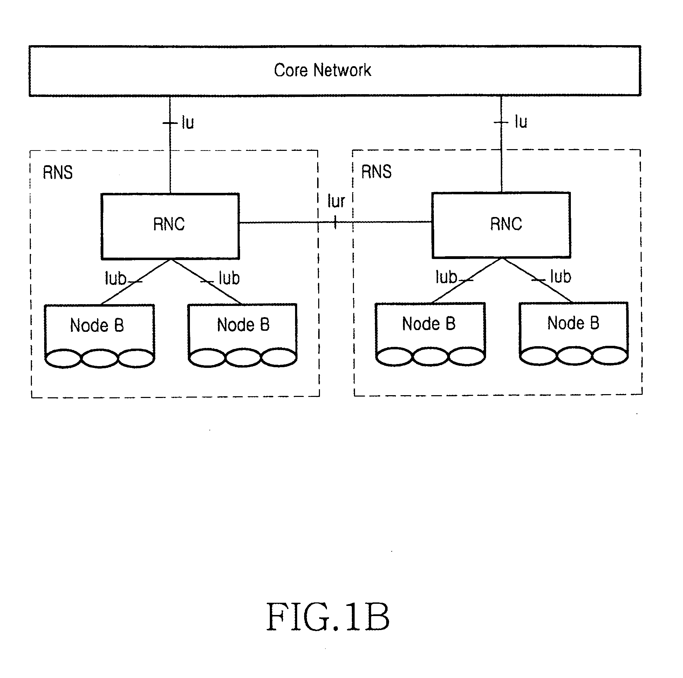

The typical architecture of a cellular radio system comprises mobile user equipments (UEs), a radio access network (RAN) and one or more core networks (CNs) as illustrated in FIG. 1A and 1B for the Universal Mobile Telecommunications System (UMTS). A UMTS is based on a third generation radio network that uses wideband code division multiple access (W-CDMA) technology.

The typical architecture of a radio access network comprises base stations and radio network/ base station controllers (RNC/ BSC). The base stations handle the actual communication across the radio interface and cover a specific geographical area also referred to as a cell. In addition to controlling the base stations connected to the RNCs, the RNCs include functionality such as the allocation of radio resources and local mobility, among others. An RNC connects to one or more core networks via the Iu interface. The RNC also connects to a number of base stations such as node Bs for environments that utilize a UMTS Terrestrial Radio Access Network (UTRAN) via the Iub interface and possibly to one or more other RNCs via the Iur interface.

HS-DPA (High-Speed Downlink Packet Access) is a Downlink Shared channel added to the UMTS in 3GPP Release 5 (Rel-5). Instead of using dedicated resources, resources are shared between UEs and allocated to specific UEs when the specific resources are required for a single transmission.

In Rel-5 of UMTS, the High Speed Downlink Packet Access (HS-DPA) channel is introduced to facilitate higher throughputs in downlink. The HS-DPA channel is different from dedicated channels that are only used for a specific UE in that it employs channels that are shared between different UEs in the cell.

When using dedicated channels, the downlink information may be transferred via more than one cell. For example, the UE may combine the information received from different cells. This parallel reception is most relevant when the UE is at the edge of a cell, where the quality of the radio connection (also referred to as the radio link) is the lowest. When moving towards the cell edge, the network may establish radio connections to neighboring cells in order to maintain the overall quality. This technique allows for a soft handover, since the connection to the neighboring cell is established prior to the release of the connection to the current cell. This technique is also referred to as 'make before break'. The set of cells with which the UE is maintaining a radio connection is referred to as the active set.

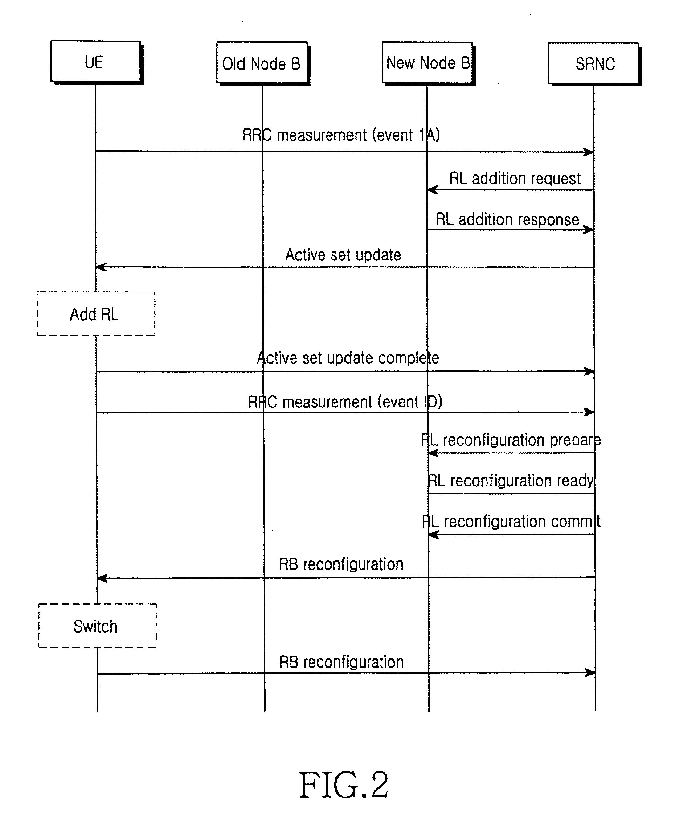

When HS-DPA related shared channels are used, the downlink information is transferred via one cell only. The downlink information is transferred via the serving HS-DSCH cell. When the UE moves towards another cell, an Original HS-DSCH serving cell change procedure is performed. An overview of the original HS-DSCH serving cell change procedure, involving a change of node B case, is illustrated in FIG. 2.

The procedure starts with a measurement report from the UE indicating that the quality of the new radio link is good (event 1A). The UTRAN then instructs the target node B which manages target cell to establish the new radio connection. Subsequently, the UE is informed about the addition of the radio link to the active set.

When the new radio link becomes the best cell, the UE sends another measurement report (event 1D). Upon receiving this report, the UTRAN orders the target node B to establish the HS-DPA configuration. Subsequently, the UE is informed about the HS-DSCH serving cell change which is done by means of a radio bearer reconfiguration procedure.
The original HS-DSCH serving cell change procedure has been shown to involve significant delays which degrade the overall throughput. If the signaling radio bearers (RBs) are transported over the HS-DPA, the current procedure may also result in an unacceptable call drop rate. This is because the message instructing the UE to perform the HS-DSCH serving cell change is delivered via the old HS-DSCH serving cell. If radio conditions are changing quickly (for example, a UE that is rapidly moving), it may not be possible to successfully deliver the message which will result in a dropped call.

Discussion paper "Enhanced HSDPA Re-pointing Scheme", 3GPP TSG-RAN WG2 #48, R2-051969, 29 August 2005, pages 1-8, XP002416750 discloses an enhanced HSDPA re-pointing scheme which uses pre-loading of UE and NodeB with HS related configuration, parallel monitoring of source and target NodeB HS-SCCHS, and implicit re-pointing to target NodeB at first scheduling occurrence.

Discussion paper "Proposal for supporting Real Time services over HSDPA" 3GPP TSG-RAN2 #46BIS, 4 April 2005, pages 1-6, XP002368691 addresses service interruption time in case of handover. It is suggested that the UTRAN pre-configures resources to get ready for the HSDPA serving link handover.

It is the object of the present invention to provide improved methods for transmission and reception of packet data which enable a reduced additional resource allocation for active set cells.

The object is solved by the subject matter of the independent claims.

Preferred embodiments of the present invention are defined by the dependent claims.

An aspect of exemplary embodiments of the present invention is to address at least the above problems and/or disadvantages and to provide at least the advantages described below. Accordingly, an aspect of exemplary embodiments of the present invention is to provide a system and method for an additional measurement event and a modified allocation procedure in a UTRAN.

The HS-SCCH codes, the hybrid automatic request (HARQ) memory and the power (related to the allocated initial capacity) are the main scarce resources that UTRAN allocates for a pre-configured/ candidate HS cell.

According to an exemplary embodiment of the present invention, two proposals for reducing the additional resource allocation are presented. The first proposal involves a) the introduction of an additional measurement event and the second proposal involves the introduction of a modified allocation procedure.

The two solutions are independent. Therefore, each option can be used by itself. However, the additional measurement event and the modified allocation procedure may also be used in conjunction with each other.

Furthermore, the node B can detect that the UE has completed the HS-DSCH serving cell change. This procedure facilitates the use of a limited 'initial' control channel configuration for candidate set cells, to ultimately limit UE complexity.

### BRIEF DESCRIPTION OF THE DRAWINGS

The above and other exemplary objects, features and advantages of certain exemplary embodiments of the present invention will be more apparent from the following description taken in conjunction with the accompanying drawings, in which:

FIG. 1A and 1B are diagrams illustrating the typical architecture of a cellular radio system comprising one or more core networks (CNs) for the Universal Mobile Telecommunications System (UMTS);

FIG. 2 is a diagram illustrating an original HS-DSCH serving cell change procedure which involves a change of node B case;

FIG. 3 is a diagram illustrating an enhanced HS-DSCH serving cell change procedure which involves a change of node B case;

FIG. 4A is a diagram illustrating an architecture of the HS-DPA related functionality of a UE;

FIG. 4B and 4C are diagrams illustrating an architecture of the HS-DPA related functionality of a node B;

FIG. 5A is a flowchart illustrating the behavior of the UE according to an exemplary embodiment of the present invention;

FIG. 5B is a flowchart illustrating the behavior of the UTRAN according to an exemplary embodiment of the present invention.

FIG. 6A is a flowchart illustrating a procedure for a UE's receipt of data via a new cell according to an exemplary embodiment of the present invention; and

FIG. 6B is a flowchart illustrating a procedure for a node B's pre-allocation of HS-DSCH resources according to an exemplary embodiment of the present invention.

Throughout the drawings, the same drawing reference numerals will be understood to refer to the same elements, features and structures.

### DETAILED DESCRIPTION OF EXEMPLARY EMBODIMETNS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.

The present invention is based on the system of transmitting packet data, such as evolution Dara&Voice(EV-DV), Long Term Evolotion(LTE) Wideband Code Division Multiple Access (WCDMA) High Speed Downlink Packet Access (HSDPA).An exemplary embodiment of the present invention will be described herein with reference to a WCDMA HSDPA. In addition, RNC and Node B mean logical objects in the present invention, which are composed of one physical object or several separated physical objects.

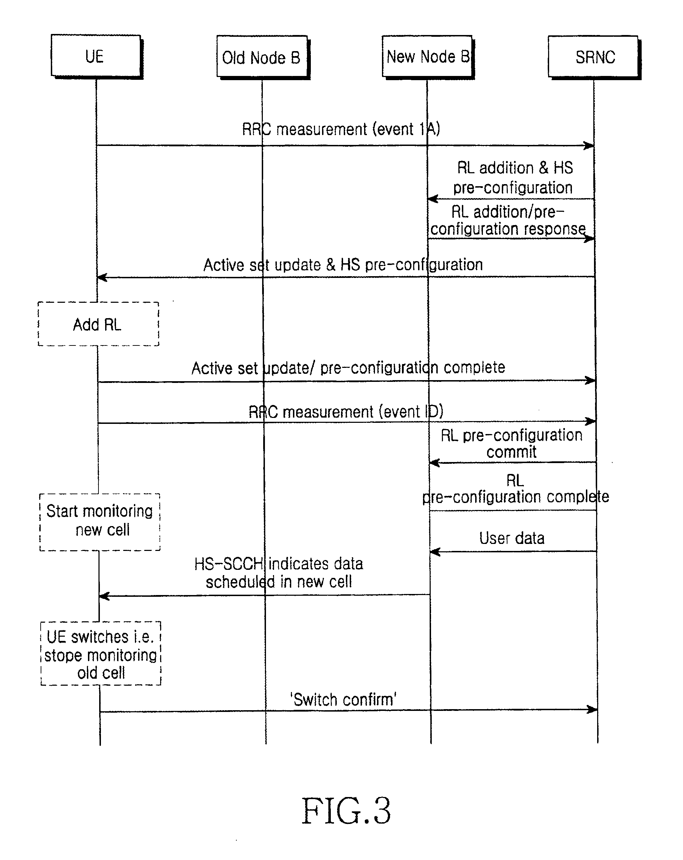

An enhanced procedure is proposed in an attempt to improve the performance of the HS-DSCH cell change procedure. This procedure is referred to as the 'Enhanced HSDPA re-pointing procedure'. An overview of this enhanced HS-DSCH serving cell change procedure, which involves a change of node B case, is provided in FIG. 3.

There are main differences between the Enhanced HSDPA re-pointing procedure and the original HS-DSCH serving cell change procedure.

Whenever a cell is added to the active set, the RNC may decide to prepare the UE and the node B for a possible HS-DSCH cell change to the concerned cell, by pre-configuring HSDPA related information.

When the UE detects that one of the pre-configured cells has become the best, it starts monitoring the HS-SCCHs channel of the concerned cell (after waiting for a configurable amount of time) while it continues normal HSDPA operation for the current serving HS-DSCH cell.

In HSDPA, the HS-SCCH channel is used by the node B to signal information about the scheduling of data, which is transferred via the HS-DSCH channel

When the RNC decides to perform the HS-DSCH cell change, it indicates this to the UE via one of the HS-SCCHs of the concerned target cell. Upon detection of data that is scheduled via an HS pre-configured (HS candidate) cell, the UE switches. For example, the concerned cell becomes the serving HS-DSCH cell

Prior to the indication on HS-SCCH such as prior to switching to the new cell, the RNC may order the current cell to discontinue HS- transmission. The source node may provide status information regarding data that is still outstanding. Alternatively, the RNC may delay discontinuation of the HS-transmission in the current cell to reduce the interruption time. However, this may result in unnecessary retransmissions

It should be noted that the Enhanced HS-DPA re-pointing procedure applies a modified version of the Radio Link Reconfiguration procedure, in which the HDSPA configuration is preloaded during a prepare/ready phase while the actual use of the configuration triggered by the commit is delayed (or does not happen at all).

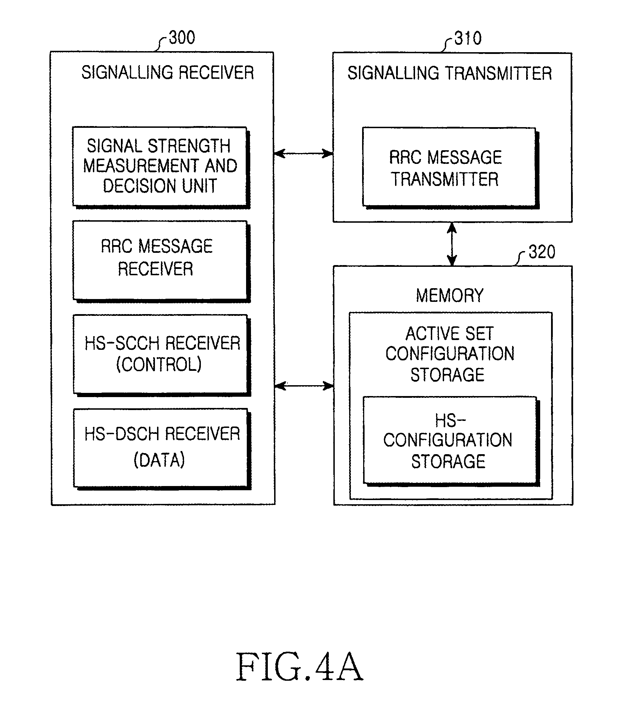

FIG. 4A illustrates an architecture of the HS-DPA related functionality of a UE. The UE comprises a signaling receiver, a signaling transmitter and memory. The signaling receiver 300 comprises a unit that measures the signal strengths of cells. The unit also determines whether a condition for initiating a measurement report has passed a section that handles the reception of the RRC (radio resource control) messages and a section that receives the HS-DPA control information, such as HS-SCCH (High Speed Shared Control Channel) in the UMTS and a section that receives the HS-DPA data information such as the HS-DSCH (High Speed Downlink Shared Channel) in the UMTS.

The signaling transmitter 310 mainly handles the transmission of RRC messages. For example, the signaling transmitter 310 focuses on reporting a measurement or on confirming the successful completion of a UTRAN command. The memory 320 comprises configuration information for each active set cell. More specifically, the memory 320 comprises HS-DPA configuration information for the HS-DSCH serving cell.

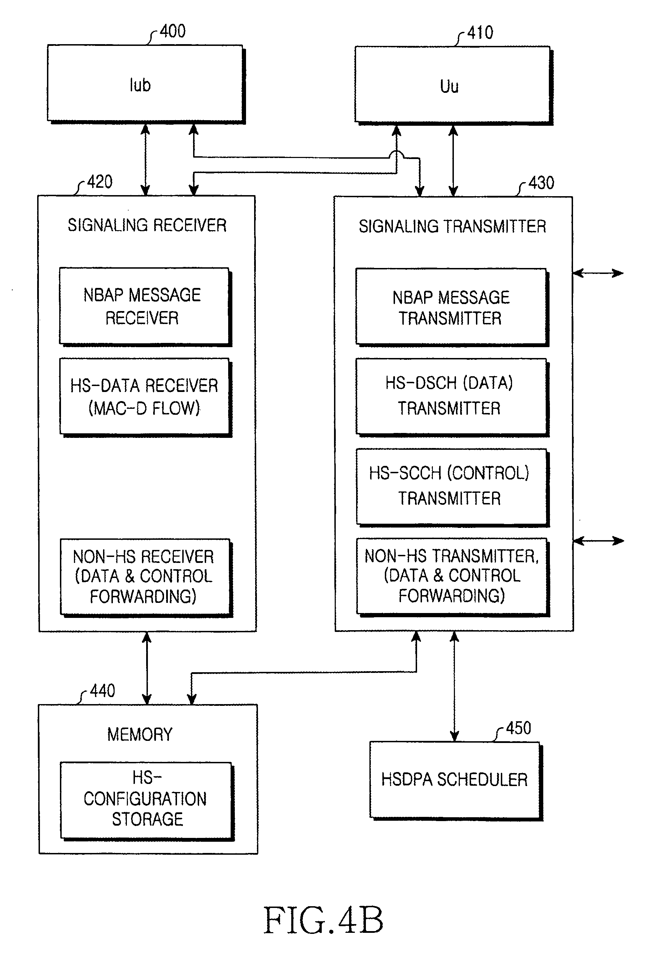

FIG. 4B illustrates an architecture of the HS-DPA related functionality of a node B, comprising a signaling receiver, a signaling transmitter, a memory and a scheduler. The figure also illustrates the Uu and the Iu interfaces. The signaling receiver 420 comprises a section that handles the reception ofNBAP messages, a unit for receiving the HS-data from the Iu interface and a unit for receiving the other control and data information, both from the Uu and the Iu interfaces.

The signaling transmitter 430 comprises of a section that handles the transmission of the NBAP (Node B Application Part) and messages for the section that handles the transmission of HS-DPA control information such as HS-SCCH in the UMTS. The signaling transmitter 430 also comprises a section that handles the transmission of HS-DPA data information such as the HS-DSCH in the UMTS. The signaling transmitter 430 also comprises a section that handles the transmission of other control and data information to the Uu and Iu interfaces.

The HSDPA scheduler 450 determines the actual scheduling of HS-DPA data which it communicates to the node B's transmitter and to the UE by transmitting HS-DPA control information.

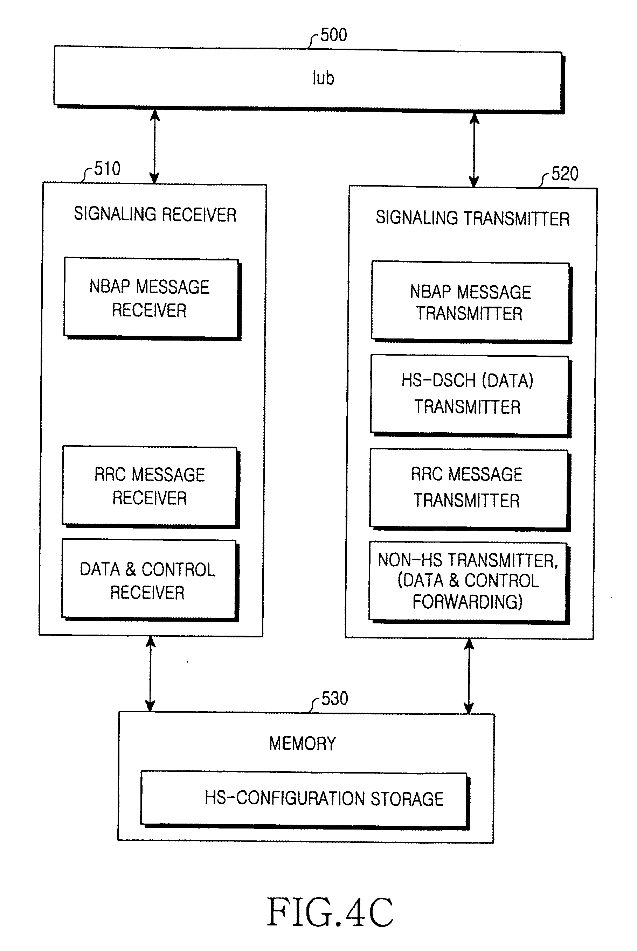

FIG. 4C illustrates an architecture of the HS-DPA related functionality of an (S) RNC, comprising a signaling receiver 510, a signaling transmitter 1520 and a memory 530. The signaling receiver 510 comprises a section to handle the reception of NBAP messages, a unit receive RRC messages and to partially handle the reception of control and data information from the Iub interface 500. This unit also isolates the NBAP and RRC message and forwards them to the respective sections. The signaling transmitter comprises a section to handle the transmission of NBAP messages, a section to handle the transmission of RRC messages, a section to transmit the other control and data information and a section to transmit HS-DPA related data.

During the handover period, the UE may have to monitor twice as many HS-SCCHs as today (4 per cell) which increases UE complexity. In response, it was clarified that the UE may monitor only one HS-SCCH from a candidate/ pre-configured cell, although it could be more.

UTRAN has to allocate additional resources and not only for the serving cell but also for all other cells of the active set. The UE bases the CQI reporting on the serving HS-DSCH cell until it switches to the new cell. For example, the UE will base the CQI reporting on the serving HS-DSCH cell until an indication on an HS-SCCH in the candidate cell is received. As a result, the target cell will initially have to do a "blind" transmission. This may result in loss of several packets initially transmitted via the new cell. Alternating the CQI reports is one way to alleviate this problem. Also, providing reports for candidate cells may overcome this problem.

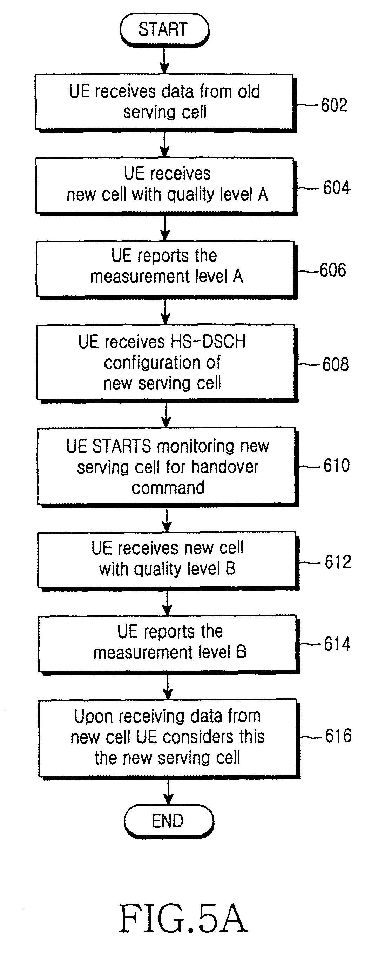

One way to reduce the additional resource allocation is to perform the pre-configuration only for cells whose quality is 'approaching' the quality of the best cell. For example, the addition resource allocation can be performed for cells which are real candidates for the HS-DSCH serving cell change. UTRAN configures the UE to send a report whenever it detects a cell whose quality exceeds a quality level. According to an exemplary implementation, UTRAN configures the UE to send a report when it detects a cell whose quality exceeds a level A as illustrated in FIG. 5A. This quality level may be configurable and relative to the current serving HS-DSCH cell such as the best cell. Upon receiving a report that the quality of a new cell exceeds a quality level A, UTRAN adds the cell to the candidate set by pre-configuring the HS-DSCH configuration.

The above procedures make it possible to limit the number of cells in the candidate set. For example, the candidate set may include only a subset of the active set cells as used in the UMTS. FIG.s 5A and 5B illustrate the behavior of the UE and the UTRAN respectively.

With reference to FIG. 5A, the UE receives data from the old serving cell (step 602). The UE receives a new cell with quality level A (step 604). The UE then reports the measurement level A in step 606. In step 608, the UE receives a HS-DSCH configuration of the new serving cell. The UE starts monitoring the new serving cell for a handover comment in step 610. In step 612, the UE receives the new cell with quality level B. The UE reports the measurement level B (step 614). Once data is received from the new cell, the UE considers this new serving cell (step 616).

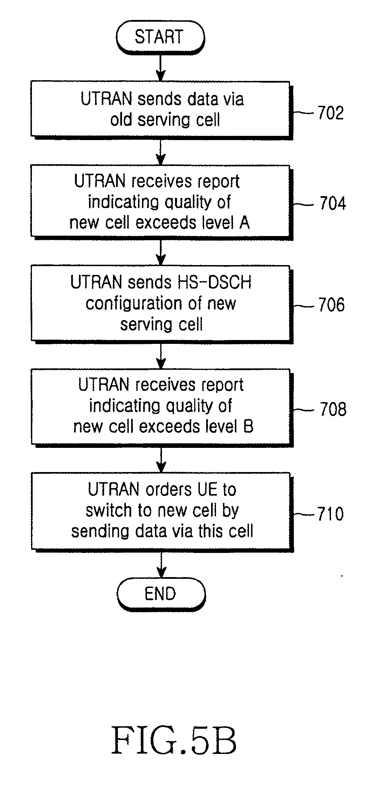

According to an exemplary embodiment of the present invention as illustrated in FIG. 5B, the UTRAN sends data via the old serving cell (step 702). The UTRAN receives a report that indicates that the quality of the new cell exceeds level A (step 704). The UTRAN sends HS-DSCH configuration of the new serving cell in step 706. In step 708, the UTRAN receives a report that indicates that the quality of the new cell exceeds level B. The UTRAN orders the UE to switch to a new cell by sending data via this cell (step 710).
In UMTS, the above can be achieved by configuring an additional measurement for cells that are part of the active set that are neither an HS-DSCH serving cell nor an HS pre-configured cell. For the measurement event to be triggered when an active set cell starts or stops fulfilling the conditions of candidate serving cell, specific options are considered. An extension of the current '1A' and '1B' events and an introduction of two new measurement events are considered.

In solution involving the extension of the current '1A' and '1B' events, the current 1a and 1b events are re-used as triggers to add or remove the HSDPA pre-configuration from cells in the active set.

One measurement is configured to include the events 1a, 1b and 1c for management of the active set and includes event 1d to trigger the HS-DSCH serving cell re-pointing.

In addition, a second measurement is configured to include the events 1a and 1b for management of the HS candidate set.

System parameter W is preferably set to 0, and the reporting range parameter R set to a smaller value than the R used in the first measurement.

For event 1A, the IE(Information Element) "triggering condition 2" is set to "all cells in the active set excluding the cells in the HS candidate set and the HS-DSCH serving cell". It should be noted that this can require a small extension of the current protocol

For event 1B, the IE "triggering condition 2" is set to "all cells in the HS candidate set". It should be noted that this also can require a small extension of the current protocol

For the event 1A, the IE "Measurement Report Transfer Mode" is preferably set to 'AM(Acknowledge Mode)'. The IE "Amount of reporting" is set to '1', and the IE "Reporting interval" is set to 0(no-periodic).

The use of 'AM' for IE "Measurement Report Transfer Mode" mostly applies for networks including cells that do not support HSDPA. The UE is currently not aware of a cell that supports HSDPA and hence it would trigger the event also for cells not supporting HSDPA. Since such a cell would never be added to the HS candidate set, the UE would continue reporting values other than those indicated above which would be used for IEs "Amount of reporting" and IE "Reporting interval".

Rather than extending the current '1A' and '1B' events, two new measurements events can be introduced with the same characteristics as previously described for the extended version of the event 1A and 1B. The advantage of this approach is that it would not affect the currently specified events.

Another way to reduce the additional resource allocation is to indicate to the node B that the resource allocation does not concern a normal resource allocation but a modified version in which the resources only need to be reserved or pre-allocated. The resources are taken in to normal use only when the candidate cell actually becomes the serving cell. The node B may use this information to accept more reservation requests than it can actually handle. The percentage of the 'reserved' resources that will actually end up being used depends on RNC implementation. For example, the HS candidate set management affects the percentage of the 'reserved' resources that will actually end up being used. A parameter could be introduced in the Radio Link Reconfiguration procedure to inform the node B about this likelihood.

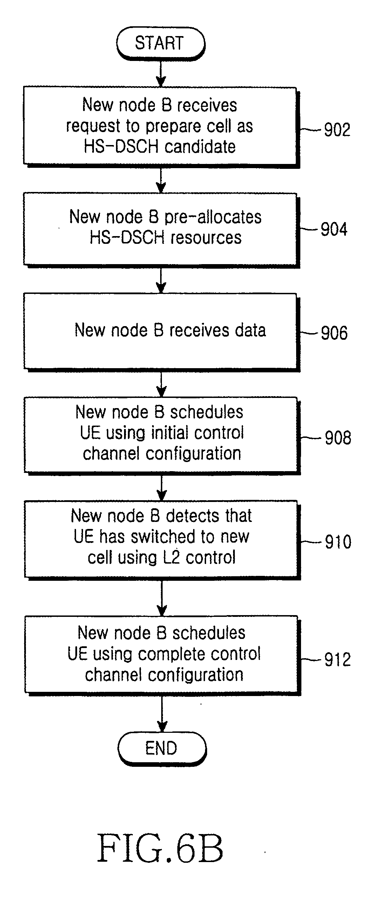

This procedure is illustrated by FIG. 6B, which shows the operation of the 'node B'. More specifically, an exemplary embodiment of the present invention provides a procedure that is simple, fast and does not require any additional control signals. FIG.s 6A and 6B illustrate the procedure for the UE and the node B, respectively according to exemplary embodiments of the present invention.

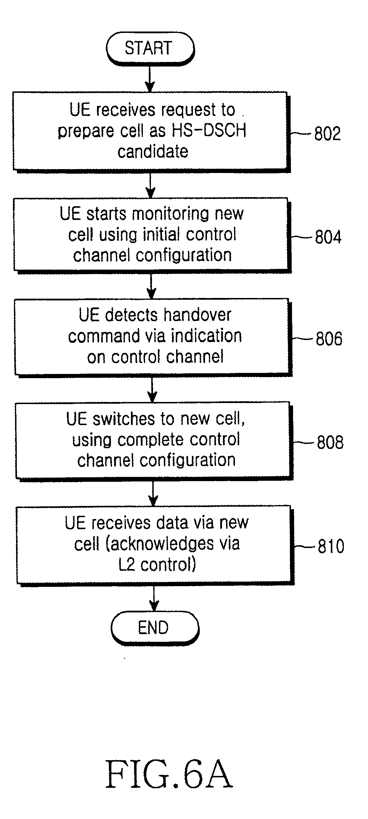

With reference to FIG. 6A, the UE receives a request to prepare the cell as an HS-DSCH candidate (step 802). The UE starts monitoring the new cell using an initial control channel configuration (step 804). The UE detects a handover command via an indication on the control channel (step 806). In step 808, the UE switches to a new cell using a complete control channel configuration. The UE receives data via a new cell which is acknowledged via an L2 control in step 810.

According to FIG. 6B, the new node B receives a request to prepare a cell as an HS-DSCH candidate (step 902). The new node B pre-allocates HS-DSCH resources (step 904). In step 906, the new node B receives data. The new node B schedules the UE using an initial control channel configuration (step 908). In step 910, the new node B detects that the UE has switched to a new cell using an L2 control. The new node B schedules a UE using complete control configuration (step 912).

As previously mentioned, the monitoring of the HS-DSCH control channels for a larger number of cells increases UE complexity. This increase in complexity may be overcome by applying a limited 'initial' control channel configuration for candidate set cells. For example, the number of HS-SCCH a UE must monitor could be reduced to one in a UMTS.

An exemplary embodiment of the present invention provides an apparatus and method for switching between the initial and the normal control channel configuration. The control channel configuration affects the amount of data that can be transferred to a UE. Hence, to ensure continuity in the data transfer rate, it is desirable to use a fast switching procedure.

Once the completion of the re-pointing by the UE has been confirmed, the node B should only switch from the initial to the normal/ complete control channel configuration. Otherwise the UE may not receive any of the control information or the corresponding data.

According to an exemplary embodiment of the present invention, the target node B switches to a normal operation based on the L2 control information for the data received in the new cell. An ACK for x different HARQ process transmissions is received. According to an exemplary implementation, "x" is in the range from 2-4. Once the ACK is received, a single ACK is considered to be an insufficient reliable indication when the error ratio of the DTX to ACK is taken into consideration. The error ratio of the DTX to ACK is in the order of 10-2.

The additional resource allocation for the 'Enhanced HSDPA re-pointing procedure' is reduced by performing the pre-configuration only for cells that are 'approaching' the best cell. More specifically, the additional resource allocation is reduced by performing the pre-configuration only for cells becoming a real candidate for the serving cell change, rather than for all cells of the active set

The proposed solution involves the configuration of an additional measurement. However, since the UE is currently required to support up to 8 intra frequency events this is not regarded to be a serious drawback.

The additional resource allocation for the 'Enhanced HSDPA re-pointing procedure' is reduced assuming that only a percentage of the 'reserved' resources will actually end up being used.

The proposed solution involves some changes to the Radio Link Reconfiguration procedure. Since a number of changes are required to be made to the procedure, this is not regarded to be a serious drawback

Also, a simple and fast procedure is proposed by which the node B can switch from initially using one (or a limited number) HS-SCCH to the normal operation upon HS-DPA re-pointing.

The procedure does not require any additional control signaling.

The above described exemplary embodiments of the present invention have been described in the context of a UMTS. However, the present invention may also be applied to other similar systems.

The present invention can also be embodied as computer readable codes on a computer readable recording medium. The computer readable recording medium is an data storage device that can store data which can thereafter be read by a computer system. Examples of the computer readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The computer readable recording medium can also be distributed over network-coupled computer systems so that the computer readable code is stored and executed in a distributed fashion. Also, functional programs, codes and code segments for accomplishing the present invention can be easily construed as within the scope of the invention by programmers skilled in the art to which the invention pertains.

While the present invention has been shown and described with reference to certain exemplary embodiments thereof, it will be understood by those skilled in the art that various changes in form and details may be made therein without departing from the scope of the invention as defined by the appended claims.

## Claims

1. A method for receiving packet data in a mobile communication system , the method comprising the steps of:
sending information about a cell to be added to an active set from a user equipment, UE, to a UMTS Terrestrial Radio Access Network, UTRAN;
updating, by the UE, the active set under control of the UTRAN and performing a pre-configuration for a high speed downlink packet access, HSDPA;
sending information about a best cell change from the UE to the UTRAN after the pre-configuration; and
**characterized by** the further steps of
monitoring (804) a handover command for the HSDPA from one of the active set cells using a limited control channel configuration in order to cause a handover by detecting (806) the handover command;
switching (808) to the one of the active set cells based on scheduling from the one of the active set cells using a complete control channel configuration; and
receiving (810) the packet data from the one of the active set cells after the switching;
wherein the limited control channel configuration is using less control channel resources than the complete control channel configuration.

2. The method of claim 1, wherein the UTRAN which manages the one of the active set cells provides the HSDPA to the UE after receiving an acknowledgement message through L2 control.

3. The method of claim 2, wherein the acknowledgement message is for k different automatic repeat request, ARQ, process transmissions.

4. The method of claim 3, wherein k is in a range between 2 and 4.

5. A method for transmitting packet data in a mobile communication system comprising a user equipment, UE, the method comprising the steps of:
receiving (902), from the UE, information about a new cell to be added to an active set of the UE;
performing (904); by a UMTS Terrestrial Radio Access Network, UTRAN, a pre-configuration for a high speed downlink packet access, HSDPA, in response to the information received from the UE; and
**characterized by** the further steps of
transmitting (908), by one of the active set cells, a handover command to the UE using a limited control channel configuration in order to cause a handover to the one of the active set cells; and
scheduling (912), by the UTRAN, the UE through a complete control channel configuration after detecting (910) the handover command to switch to the one of the active set cells,
wherein the limited control channel configuration is using less control channel resources than the complete control channel configuration.

6. The method of claim 5, wherein the UTRAN which manages the one of the active set cells provides the HSDPA to the UE after receiving an acknowledgement message through L2 control.

7. The method of claim 6, wherein the acknowledgement message is for k different automatic repeat request, ARQ, process transmissions.

8. The method of claim 7, wherein k is in a range between 2 and 4.

## Patentansprüche

1. Verfahren zum Empfangen von Paketdaten in einem mobilen Kommunikationssystem, wobei das Verfahren folgende Schritte umfasst:
Senden von Informationen über eine Zelle, die zu einem aktiven Satz hinzugefügt werden soll, von einem Benutzergerät, UE, zu einem UMTS Terrestrial Radio Access Network, UTRAN;
Aktualisieren des aktiven Satzes durch das UE unter Steuerung des UTRAN und Ausführen einer Vorkonfiguration für einen Hochgeschwindigkeits-Downlink-Paketzugriff, HSDPA, und
Senden von Informationen über einen Wechsel einer besten Zelle von dem UE zu dem UTRAN nach der Vorkonfiguration;
weiterhin **gekennzeichnet durch** folgende Schritte:
Überwachen (804) eines Handover-Befehls für den HSDPA von einer der Zellen des aktiven Satzes unter Anwendung einer begrenzten Steuerkanalkonfiguration, um einen Handover **durch** Erfassen (806) des Handover-Befehls zu bewirken;
Umschalten (808) zu der einen der Zellen des aktiven Satzes auf der Basis einer Zeitgabe von einer der Zellen des aktiven Satzes unter Anwendung einer vollständigen Steuerkanalkonfiguration; und
Empfangen (810) der Paketdaten von der einen der Zellen des aktiven Satzes nach dem Umschalten;
wobei die begrenzte Steuerkanalkonfiguration weniger Steuerkanal-Ressourcen verbraucht als die vollständige Steuerkanalkonfiguration.

2. Verfahren nach Anspruch 1, bei dem das UTRAN, das die eine der Zellen aus dem aktiven Satz verwaltet, den HSDPA für das UE bereitstellt, nachdem es eine Bestätigungsnachricht durch L2-Steuerung erhalten hat.

3. Verfahren nach Anspruch 2, bei dem die Bestätigungsnachricht für k unterschiedliche automatische Wiederholungsanfrage-, ARQ-, Vorgangsübertragungen bestimmt ist.

4. Verfahren nach Anspruch 3, bei dem k in einem Bereich zwischen 2 und 4 liegt.

5. Verfahren zum Senden von Paketdaten in einem mobilen Kommunikationssystem, das ein Benutzergerät, UE, enthält, wobei das Verfahren folgende Schritte umfasst:
Empfangen (902) von Informationen über eine neue Zelle, die zu einem aktiven Satz des UE hinzugefügt werden soll, von dem UE und
Ausführen (904) einer Vorkonfiguration für einen Hochgeschwindigkeits-Downlink-Paketzugriff, HSDPA, durch ein UMTS Terrestrial Radio Access Network, UTRAN, in Erwiderung auf die Informationen, die vom UE empfangen werden;
weiterhin **gekennzeichnet durch** die folgenden Schritte:
Senden (908) **durch** eine der Zellen des aktiven Satzes eines Handover-Befehls zu dem UE unter Anwendung einer begrenzten Steuerkanalkonfiguration, um einen Handover zu der einen der Zellen des aktiven Satzes zu bewirken; und
zeitliches Einordnen (912) des UE **durch** das UTRAN unter Anwendung einer vollständigen Steuerkanalkonfiguration nach dem Erfassen (910) des Handover-Befehls, um zu der einen der Zellen des aktiven Satzes umzuschalten,
wobei die begrenzte Steuerkanalkonfiguration weniger Steuerkanal-Ressourcen verbraucht als sie vollständige Steuerkanalkonfiguration.

6. Verfahren nach Anspruch 5, bei dem das UTRAN, das die eine der Zellen des aktiven Satzes verwaltet, den HSDPA dem UE bereitstellt, nachdem es eine Bestätigungsnachricht durch L2-Steuerung empfangen hat.

7. Verfahren nach Anspruch 6, bei dem die Bestätigungsnachricht für k unterschiedliche automatische Wederholungsanfrage-, ARQ-, Vorgangsübertragungen bestimmt ist.

8. Verfahren nach Anspruch 7, bei dem k in einem Bereich zwischen 2 und 4 liegt.

## Revendications

1. Procédé de réception de données en paquets dans un système de communication mobile, le procédé comprenant les étapes consistant à :
envoyer des informations concernant une cellule destinée à être ajoutée à un ensemble actif d'un matériel d'utilisateur, UE, à un réseau d'accès radio terrestre UMTS, UTRAN ;
mettre à jour, par l'UE, l'ensemble actif sous le contrôle de l'UTRAN et exécuter une préconfiguration pour un accès rapide en mode paquet sur la liaison descendante, HSDPA ;
envoyer des informations concernant le meilleur transfert cellulaire de l'UE à l'UTRAN après la préconfiguration ; et
**caractérisé par** les étapes supplémentaires consistant à
surveiller (804) une commande de transfert cellulaire pour le HSDPA de l'une des cellules de l'ensemble actif en utilisant une configuration de canal de commande limitée pour provoquer un transfert cellulaire par détection (806) de la commande de transfert cellulaire ;
commuter (808) sur la cellule des cellules de l'ensemble actif, en se basant sur l'ordonnancement de la cellule des cellules de l'ensemble actif en utilisant une configuration de canal de commande complète ; et
recevoir (810) les données en paquets de la cellule des cellules de l'ensemble actif après la commutation ;
dans lequel la configuration de canal de commande limitée utilise moins de ressources de canal de commande que la configuration de canal de commande complète.

2. Procédé selon la revendication 1, dans lequel l'UTRAN qui gère la cellule des cellules de l'ensemble actif fournit le HSDPA à l'UE après avoir reçu un
message d'acquittement par l'intermédiaire de la commande L2.

3. Procédé selon la revendication 2, dans lequel le message d'acquittement concerne k transmissions différentes de processus de demande de répétition automatique, ARQ.

4. Procédé selon la revendication 3, dans lequel k est compris entre 2 et 4.

5. Procédé de transmission de données en paquets dans un système de communication mobile comprenant un matériel d'utilisateur, UE, le procédé comprenant les étapes consistant à :
recevoir (902), depuis l'UE, des informations concernant une nouvelle cellule destinée à être ajoutée à un ensemble actif de l'UE ;
effectuer (904), par un réseau d'accès radio terrestre UMTS, UTRAN, une préconfiguration pour un accès rapide en mode paquet sur la liaison descendante, HSDPA, en réponse aux informations reçues provenant de l'UE ; et
**caractérisé par** les étapes supplémentaires consistant à
transmettre (908) à l'UE, par l'une des cellules de l'ensemble actif, une commande de transfert cellulaire en utilisant une configuration de canal de commande limitée pour provoquer un transfert cellulaire vers la cellule des cellules de l'ensemble actif ; et
ordonnancer (912) par l'UTRAN, l'UE par une configuration de canal de commande complète après détection (910) de la commande de transfert cellulaire pour commuter vers la cellule des cellules de l'ensemble actif,
dans lequel la configuration de canal de commande limitée utilise moins de ressources de canal de commande que la configuration de canal de commande complète.

6. Procédé selon la revendication 5, dans lequel l'UTRAN qui gère celle la cellule des cellules de l'ensemble actif fournit le HSDPA à l'UE après avoir reçu un message d'acquittement par l'intermédiaire de la commande L2.

7. Procédé selon la revendication 6, dans lequel le message d'acquittement concerne k transmissions différentes de processus de demande automatique de répétition, ARQ.

8. Procédé selon la revendication 7, dans lequel k est compris entre 2 et 4.
